# EUROPÄISCHE PATENTSCHRIFT

(11) **EP 2 736 319 B1**
(45) Veröffentlichungstag und Bekanntmachung des Hinweises auf die Patenterteilung: **07.10.2015**
(21) Anmeldenummer: 12738132.5
(22) Anmeldetag: 24.07.2012
(51) Int. Cl.: A01G 13/02, A01M 29/34, A01F 25/13

(54) **VORRICHTUNG ZUM AUSBRINGEN VON FLEXIBLEN FLÄCHENGEBILDEN**
DEVICE FOR DEPLOYING FLEXIBLE SHEET MATERIALS
DISPOSITIF POUR LE DÉPLOIEMENT DE STRUCTURES DE SURFACE SOUPLES

(30) Priorität: 26.07.2011 EP 11175429; 26.07.2011 US 201161511596 P
(43) Veröffentlichungstag der Anmeldung: 04.06.2014
(73) Patentinhaber: BASF Agro B.V., Arnhem (NL), Zürich Branch, 8055 Zürich (CH)
(72) Erfinder: ZÜHLKE, Thomas, 42653 Solingen (DE); BRUNNER, Hans-Peter, Dublin 7 (IE); O`CARROLL, Michael, Killarney Co. Kerry (IE); GIBLIN, Padraig, Scarrif Co. Clare (IE)
(74) Vertreter: Schultz, Hanna G. A.
(86) Internationale Anmeldenummer: PCT/EP2012/064456
(87) Internationale Veröffentlichungsnummer: WO 2013/014136

(56) Entgegenhaltungen:
- WO-A1-99/25174
- WO-A1-2008/142103
- DE-A1- 4 133 706
- US-A- 1 957 994
- US-A- 3 395 485

## Beschreibung

Die Erfindung betrifft eine Vorrichtung und ein Verfahren zum Ausbringen von flexiblen Flächengebilden auf zu schützende Bereiche. Die Erfindung bezieht sich des Weiteren auf ein Verfahren zum Schutz von Holzpoltern vor einem Befall durch Holzschädlinge. Als Holzschädlinge kommen beispielsweise Bockkäfer (Cerambycidae), Prachtkäfer (Buprestidae), Rüsselkäfer (Circulionidae), Borkenkäfer (Scolytidae), Holzwespen (Siricidae), Blattwespen, Afterraupen sowie beißende und saugende Insekten in Betracht.

Vor dem Hintergrund des verstärkt auftretenden Klimawandels kommt es in weiten Teilen Europas aber auch an anderen Orten regelmäßig zu starken Stürmen, die zu einem großflächigen Holzbruch in Wäldern führen. Dieser Holzbruch kann häufig nicht unmittelbar weiterverarbeitet werden sondern muss für Wochen oder Monate vor Ort vor Holzschädlingen geschützt werden. Der Begriff Holzpoltern ist nachfolgend breit zu verstehen und umfasst nicht nur eine geschichtete Ansammlung von Kurzholz-Abschnitten, sondern auch Holzstapel (z.B. mit Schnittlängen von mehr als 2 m) und andere im Forst auftretende Ansammlungen von Holzstämmen.

Gleichzeitig lässt sich eine Vergrößerung der Borkenkäferdichte in Europa und eine steigende Verbreitung anderer Holzschädlinge feststellen. Die bislang vorliegenden Schutzsysteme für Holz, insbesondere für das nicht zeitnah einer Weiterverarbeitung zugeführte Holz sind bislang unzureichend.

Verschiedene Verfahren zur Konservierung von Holz und Holzwerkstoffen sind seit Jahren bekannt. So wird beispielsweise in DE-A 24 38 334 eine Konservierung von Holzstämmen durch eine Behandlung des Holzes mit insektiziden oder fungiziden Wirkstoffen in einem ölhaltigen Lösungsmittel beschrieben. Nachteilig an derartigen Behandlungsverfahren ist es insbesondere, dass die Aufbringung der Wirkstoffe arbeitsaufwendig ist und große Mengen an umweltschädlichen Substanzen zum Einsatz gebracht werden. Daher sind derartige Verfahren nicht wiederholt am gleichen Ort anwendbar.

Aus der WO 2008/142103 A1 ist ein Verfahren und eine Vorrichtung zum Schutz von Holzpoltern bekannt, bei dem die Holzpoltern mit einem flächigem Material weitestgehend abgedeckt werden, wobei das flächige Material durch eine Imprägnierung mit einem insektiziden Wirkstoff eine Schutzwirkung gegen Schadorganismen aufweist.

Das Aufbringen eines flexiblen Flächengebildes, beispielsweise in Form eines Netzes, auf Holzpoltern zum Schutz vor Schadorganismen verringert die Umweltbelastung und ermöglicht einen andauernden und großflächigen Einsatz, ist jedoch mit einem großen Aufwand verbunden.

Aus der WO 99/25174 A1 ist eine Vorrichtung zum Ausbringen von Abdeckmaterialien bekannt. Die Vorrichtung umfasst einen Anhänger, der über eine Kupplung mit einer Zugmaschine verbunden wird. Mit dem Anhänger ist ein Ausleger verbunden, dessen Höhe über eine Stange einstellbar ist. Noch unbenutzte Netze werden zum erstmaligen Ausbringen von einer Rolle abgerollt. Die Rolle ist im unteren Bereich des Anhängers untergebracht und auf Walzen gelagert, die je nach Ausführungsform von einem Motor angetrieben werden. Dabei ist die Achse der Rolle parallel zur Fahrtrichtung der Zugmaschine ausgerichtet. Das abgerollte Netz wird über eine gekrümmte Röhre dem Ausleger zugeführt und dabei umgelenkt. Anschließend wird das Netz über einen Spreizer geführt und über den zu schützenden Pflanzen ausgelegt.

Aufgabe der Erfindung ist es, eine Vorrichtung und ein Verfahren breitzustellen, mit dem ein flexibles Flächengebilde, insbesondere ein pestizidbehandeltes Netz, einfach und schnell über zu schützende Bereiche oder zu schützende Güter, insbesondere Holzpoltern, ausgebracht werden kann, um diese weitestgehend abzudecken. Diese Arbeit soll mit Hilfe der Vorrichtung durch einen einzelnen Arbeiter durchführbar sein. Unter weitgehend abgedeckt ist dabei zu verstehen, dass beispielsweise ein Holzpolter nahezu vollständig von dem flexiblen Flächengebilde umgeben ist (außer der Standfläche), so dass anfliegende Insekten beispielsweise nicht direkt auf dem Holz landen. Unter Holzpoltern werden Holzstapel verschiedener Form und Größe verstanden. Eine weitere Aufgabe der Erfindung ist es, ein Verfahren zum Schutz von Holzpoltern vor dem Befall durch Schadorganismen bei der Lagerung bereitzustellen. Weitere Anwendungsbereiche umfassen das Abdecken von Feldern mit Folien im Gemüseanbau, das Abdecken von kleinen Bäumen mit einer Größe unterhalb von etwa 4 bis 5 Metern sowie das Abdecken von Sträuchern und Weinreben mit Netzen.

Die Aufgabe wird gelöst durch eine Vorrichtung zum Ausbringen von flexiblen Flächengebilden gemäß Anspruch 1 und ein Verfahren gemäß Anspruch 17.

Die universelle Kupplung ist bevorzugt eingerichtet, die Vorrichtung an einem Kran oder einem Ausleger der Zugmaschine zu befestigen. Unter dem Begriff "Zugmaschine" wird auch ein Forwarder, ein Kranrückezug, ein Rückezug, ein Traktor oder jedes Land und/oder Forstwirtschaftliche Nutzfahrzeug verstanden. Die universelle Kupplung ist bevorzugt in der Mitte der Vorrichtung angeordnet.

Das auszubringende flexible Flächengebilde befindet sich in einer Kartusche. Die Kartusche umfasst eine Rolle, auf die das flexible Flächengebilde aufgewickelt wird und ermöglicht eine leichte Handhabung des flexiblen Flächengebildes. Die Rolle wird beispielsweise aus Pappe, Kunststoff, Holz oder Metall gefertigt. In einer Ausführungsform umfasst die Kartusche weiter ein Gehäuse, welches zum einen das flexible Flächengebilde vor Beschädigungen schützt, zum anderen den Kontakt von Arbeitern mit dem flexiblen Flächengebilde minimiert. Letzteres ist vor allem bei pestizidbehandelten Netzen von Vorteil.

In den Ausführungsformen, bei denen die Kartusche kein festes Gehäuse aufweist, ist die Kartusche bevorzugt mit einer Papier- oder Folienverpackung versehen, die kurz vor dem Gebrauch entfernt wird.

Ein Holzpolter weist typischerweise Abmessungen im Bereich von 2 bis 10 Metern in der Breite und 10 bis 100 Metern in der Länge auf. Dementsprechend wird für das Abdecken eines Holzpolters ein flexibles Flächengebilde, beispielsweise ein Netz, mit mindestens diesen Abmessungen benötigt. Bei dieser Anwendung ist es bevorzugt, dass eine Kartusche ein Netz mit einer Breite von 2 bis 12 Metern aufnimmt, um einen Holzpolter nahtlos abdecken zu können. Für andere Anwendungen, beispielsweise das Ausbringen von Folien über Gemüsebeten, werden entsprechend angepasste Abmessungen gewählt. Die in der erfindungsgemäßen Vorrichtung angeordneten Mittel zum Schneiden des flexiblen Flächengebildes schneiden das flexible Flächengebilde nach dem Ausbringen in der benötigten Länge zu. Die Mittel zum Schneiden des flexiblen Flächengebildes sind beispielsweise als hydraulische Schere oder als Rollmesser ausgeführt. In einer weiteren Ausführungsform sind im flexiblen Flächengebilde Sollbruchstellen vorgesehen, an denen das flexible Flächengebilde abgerissen werden kann.

Des Weiteren ist es bevorzugt, dass die erfindungsgemäße Vorrichtung ausreichend Material für das Abdecken von mindestens zwei Holzpoltern aufnehmen kann, gegebenenfalls in Form von mehreren Kartuschen. Dabei soll das Gewicht einer Kartusche bevorzugt unter 100 kg liegen. Bei Aufnahme eines Netzes mit den Abmessungen von 8 mal 100 Metern beträgt das Gewicht einer Kartusche etwa 85 kg. In einer bevorzugten Ausführungsform wird das Gewicht einer Kartusche auf etwa 25 kg beschränkt, um die Handhabbarkeit durch einen einzelnen Arbeiter sicherzustellen.

Das flexible Flächengebilde wird aus der Kartusche über die angetriebene Walze gezogen und über den Spreizer geführt, bevor es auf den zu schützenden Bereich gelegt wird.

Um einem einzelnen Arbeiter unterwegs das Wechseln der Kartusche zu ermöglichen, umfasst die Vorrichtung in einer bevorzugten Ausführungsform mindesten zwei Kartuschen und weist des Weiteren Mittel zum Wechseln der Kartuschen auf. Bevorzugt sind diese Mittel als Autoladevorrichtung ausgeführt, bei der mindestens zwei Kartuschen auf einem drehbaren Gestell gelagert sind. In einer Ausführungsform der Autoladevorrichtung werden bis zu 8 Kartuschen gleichzeitig aufgenommen. Nach dem Aufbrauchen einer Kartusche wird dann durch Drehen des Gestells eine neue Kartusche in den Bereich einer Abrolleinheit gebracht.

Eine leere Kartusche weist nur noch ein geringes Eigengewicht von beispielsweise ca. 1 kg auf und kann leicht von Hand aus der Abrolleinheit entfernt werden. In einer weiteren Ausführungsform wird das Entfernen der leeren Kartuschen automatisiert mit einer Greifvorrichtung durchgeführt.

Eine Kartusche mit der vollen Breite des ausgelegten flexiblen Flächengebildes von beispielsweise 8 Metern ist schwer in der Handhabung und nur schwer zu transportieren. In einer bevorzugten Ausführungsform der Erfindung wird das flexible Flächengebilde von der Kartusche in einem zusammengelegten, zusammengefalteten und/oder zusammengedrückten Zustand aufgenommen, so dass die Breite der Kartusche geringer als die Breite des ausgelegten flexiblen Flächengebildes ist. Bevorzugt ist das flexible Flächengebilde so zusammengelegt, zusammengefaltet oder zusammengedrückt, dass seine Breite beim Transport nicht mehr als 2 Meter beträgt.

Nach dem Abrollen des flexiblen Flächengebildes muss sichergestellt werden, dass dieses den zu schützenden Bereich vollständig überdeckt und die Ränder des flexiblen Flächengebildes auch den Boden berühren.

Im Anwendungsbeispiel eines mit einem Netz abzudeckenden Holzpolters, muss ein ausgebrachtes Netz um den Holzpolter gezogen werden, um diesen möglichst vollständig abzudecken. Wird das Netz mit einer beschwerten Schnur versehen, beispielsweise einer Bleischnur, wird das Netz durch die Schwerkraft an den Seiten eines Holzpolters bis zum Boden gezogen. Anstelle einer Bleischnur kann auch ein Draht, ein Seil, eine Kette oder ein anderes längliches schweres Material eingesetzt werden.

Erfindungsgemäß weist die Vorrichtung zusätzliche Mittel zum Abrollen eines länglichen schweren Materials, beispielsweise einer beschwerten Schnur auf. Das flexible Flächengebilde weist in dieser Ausführungsform keinen beschwerten Rand auf. Das längliche schwere Material wird zusammen mit dem flexiblen Flächengebilde ausgebracht. Besonders bevorzugt ist es, wenn das längliche schwere Material synchron mit dem flexiblen Flächengebilde abgerollt wird.

Erfindungsgemäß sind des Weiteren Mittel zum Schneiden des länglichen schweren Materials vorgesehen, um beispielsweise eine beschwerte Schnur zusammen mit dem flexiblen Flächengebilde nach dem erfolgten Ausrollen in der benötigten Länge zuzuschneiden.
Die Mittel zum Scheiden des länglichen schweren Materials sind beispielsweise als Hydraulikcutter ausgeführt.

Vor dem Ablegen des flexiblen Flächengebildes auf dem zu schützenden Bereich muss dieses entfaltet und/oder aufgeweitet werden. Um diese Arbeit mit einem einzigen Arbeiter durchführen zu können, ist an der erfindungsgemäßen Vorrichtung ein Spreizer angeordnet. Das flexible Flächengebilde wird beim Abrollen über diesen Spreizer geführt. Der Spreizer ist bevorzugt als ein gebogener Ausleger ausgeführt, wobei der Ausleger in der Mitte den höchsten Punkt aufweist und zu den Seiten abfällt. Durch die Schwerkraft und/oder zusätzlichen Zugkräften wird das flexible Flächengebilde über den gebogenen Ausleger gezogen. Dabei wirken durch die Zugkräfte und die gebogene Form des Auslegers Kräfte auf das flexible Flächengebilde ein, durch die es entfaltet und/oder auseinandergezogen wird.

In einer anderen Ausführungsform ist der Spreizer ebenfalls als gebogener Ausleger ausgeführt, dieser weist jedoch seinen tiefsten Punkt in der Mitte auf und steigt zu den Enden hin an. Das flexible Flächengebilde wird in dieser Ausführungsform von unten über eine Umlenkrolle oder eine Umlenkstange an dem Spreizer vorbeigeführt. Wiederum wirken durch die gebogene Form und den Zug am flexiblen Flächengebilde Kräfte auf das flexible Flächengebilde ein, durch die es entfaltet und/oder auseinandergezogen wird.

In einer weiteren Ausführungsform der Erfindung ist der Spreizer als gebogene Fläche ausgeführt, welche wie bei den beiden vorangegangenen Ausführungsformen eine Biegung aufweist, wobei der Spreizer entweder in der Mitte seinen höchsten Punkt aufweist und zu den Rändern hin abfällt, oder in der Mitte seinen tiefsten Punkt aufweist und zu den Rändern hin ansteigt. Im ersten Fall wird das flexible Flächengebilde wieder auf der Oberseite des Spreizers entlang geführt, im zweiten Fall läuft das flexible Flächengebilde auf der Unterseite des Spreizers entlang.

In einer weiteren Ausführungsform weist der Spreizer zusätzlich Führungselemente auf. Diese Führungselemente sind bevorzugt als Rollen oder Stangen ausgeführt und führen das flexible Flächengebilde am Spreizer entlang.

Der Spreizer ist in einer Ausführungsform zumindest teilweise aus Profilteilen, insbesondere aus Hohlprofilen, aufgebaut. Diese verleihen dem Spreizer eine große Stabilität bei geringem Gewicht.

In einer weiteren Ausführungsform ist der Spreizer in Leichtbauweise ausgeführt. Dabei werden bevorzugt Bauteile aus Leichtmetallen wie Aluminium oder Verbundstoffen eingesetzt. Durch den Einsatz von Hohlstrukturen in den Bauteilen kann weiteres Gewicht eingespart werden.

Für zusätzliche Stabilität wird der Spreizer in einer bevorzugten Ausführungsform als Fachwerk ausgeführt. In weiteren Ausführungsformen wird der Ausleger zur Verstärkung mit Rauten, einem Gitter und/oder mit einfachen/doppelten/mehrfachen Querverstrebungen ausgeführt.

Die Breite des Spreizers muss größer als die Breite des entfalteten und/oder ausgebreiteten flexiblen Flächengebildes sein, das heißt, die Breite des Spreizer liegt bevorzugt zwischen etwa 2 bis 12 Metern. Mit dieser Größe lässt sich die Vorrichtung nur schwer transportieren. Daher ist der Spreizer bevorzugt so ausgeführt, dass er faltbar und/oder teleskopartig zusammenschiebbar ist. Dies wird bevorzugt durch das Vorsehen von Gelenken und/oder Scharnieren bzw. von Schienen und/oder Teleskopstangen umgesetzt. Bevorzugt lässt sich durch das Falten und/oder Zusammenschieben die Breite des Spreizers auf unter 4 Meter reduzieren.

Werden Netze zum Abdecken von Holzpoltern verwendet, müssen diese für einen Zugang zum Holz oder im Fall einer Beschädigung oder nachlassender Wirksamkeit vom Holzpolter entfernt werden. Ähnliches gilt auch für zur Abdeckung von Feldern verwendete Folien oder Netze zum Schützen von Weinreben.

Um ein ausgebrachtes flexibles Flächengebilde wieder vom zu schützenden Bereich zu entfernen, wird das flexible Flächengebilde bevorzugt für den Abtransport wieder aufgerollt und/oder gefaltet. Zur Unterstützung dieser Tätigkeit sind in einer bevorzugten Ausführungsform der Erfindung Klammern und/oder Klemmen an den Kartuschen angeordnet. Zum Aufrollen des flexiblen Flächengebildes wird eine leere Kartusche in die Abrolleinheit bewegt und in dieser Fixiert. Das aufzurollende flexible Flächengebilde wird über einen Trichter in die Kartusche geführt und mit den Klammern und/oder Klemmen in dieser befestigt. Der Antrieb der Abrolleinheit läuft zum Aufwickeln in umgekehrter Richtung, so dass die in der Kartusche enthaltene Rolle das flexible Flächengebilde aufwickelt. Das flexible Flächengebilde kann so beim Aufrollen von der Kartusche aufgenommen werden.

Durch das ordentliche Aufrollen des flexiblen Flächengebildes auf eine Kartusche kann das flexible Flächengebilde leicht wiederverwertet werden. Im Anwendungsbeispiel der imprägnierten Netze zum Abdecken eines Holzpolters kann ein von der erfindungsgemäßen Vorrichtung wieder aufgenommenes Netz leicht erneut zum Abdecken eines Holzpolters verwendet werden.

In einer bevorzugten Ausführungsform weist das flexible Flächengebilde des Weiteren Mittel zum Monitoring und zur Überwachung von Schadorganismen auf. Diese Mittel sind bevorzugt als Pheromonfallen ausgeführt und können sowohl unter dem flexiblen Flächengebilde, als auch außerhalb des zu schützenden Bereichs angebracht sein.

In einer weiteren Ausführungsform der Erfindung wird die Anzahl an Schadinsekten ergänzend durch Prädatoren gering gehalten. Dazu weist das flexible Flächengebilde Mittel zur Steuerung und Überwachung von Prädatoren auf. Diese Mittel umfassen beispielsweise Lockstoffe.

Des Weiteren wird ein Verfahren zum Ausbringen eines flexiblen Flächengebildes auf einen zu schützenden Bereich mit der soeben beschrieben Vorrichtung bereitgestellt.

Beim Ausbringen eines flexiblen Flächengebildes mit der soeben beschriebenen Vorrichtung werden folgende Schritte durchlaufen:
a) Koppeln der Vorrichtung an eine Zugmaschine, einen Rückezug oder einen Traktor,
b) Entfalten oder Ausfahren des Spreizers,
c) Ziehend des flexiblen Flächengebildes über die angetriebene Walze und den Spreizer,
d) Bewegen der Vorrichtung an die Seite eines des schützenden Bereichs und gleichzeitiges Abrollen des flexiblen Flächengebildes und gegebenenfalls eines länglichen schweren Materials, während die Vorrichtung über den zu Schützenden Bereich bewegt wird und
e) Abschneiden des flexiblen Flächengebildes und gegebenenfalls des länglichen schweren Materials, nachdem der zu schützende Bereich vom flexiblen Flächengebilde bedeckt ist.

Die ausgebrachten flexiblen Flächengebildet sind dabei mit einer Beschwerung versehen, damit diese von der Schwerkraft in Richtung Boden gezogen wird.

Die Schritte a bis c dienen der Vorbereitung. Die erfindungsgemäße Vorrichtung wird mit der Zugmaschine verbunden und am Zielort durch Entfalten oder Ausfahren des Spreizers funktionsbereit gemacht. Das flexible Flächengebilde wird aus einer Kartusche gezogen und an der angetriebenen Walze und am Spreizer vorbeigeführt. Anschließend wird die Vorrichtung mit der Zugmaschine an die Seite des zu schützenden Bereichs bewegt. Im Anwendungsbeispiel von zu schützenden Holzpoltern wird die Vorrichtung an die Giebelseite eines Holzpolters bewegt. Dies wird bevorzugt mit einem Kran und/oder Ausleger der Zugmaschine durchgeführt. Als nächstes wird mit dem Abrollen des flexiblen Flächengebildes begonnen. Enthalt das flexible Flächengebilde keinen beschwerten Rand, wird gegebenenfalls auch ein längliches schweres Material zusammen mit dem flexiblen Flächengebilde abgerollt. Durch das zusätzliche Gewicht wird das flexible Flächengebilde zum Boden hin gezogen. Ist der Boden erreicht, wird die Vorrichtung über den zu schützenden Bereich bewegt, während das Abrollen des flexiblen Flächengebildes und gegebenenfalls des länglichen schweren Materials fortgesetzt wird. Im Anwendungsbeispiel von zu schützenden Holzpoltern bedeckt das Netz den Holzpolter und wird durch die Schwerkraft an den Seiten zu Boden gezogen. Ist die Vorrichtung an der gegenüberliegenden Seite angelangt, werden das flexible Flächengebilde und gegebenenfalls das längliche schwere Material in der benötigten Länge abgeschnitten.

In einer Variante des Verfahrens werden nach dem Abschneiden des Netzes und der beschwerten Schnüre die Enden der Schnüre miteinander verknotet. Dadurch kann das Netz um den Holzpolter festgezurrt werden und vor einem Verrutschen geschützt werden.

In einer weiteren Variante des Verfahrens wird das längliche schwere Material nach dem Ausbringen des flexiblen Flächengebildes eingesammelt und das flexible Flächengebilde wird mit anderen Mitteln beschwert und/oder befestigt. Beispielsweise wird das Netz mit einer Schnur festgezogen und verknotet.

Ein weiterer Aspekt der Erfindung ist die Bereitstellung eines Verfahrens zum Schutz von Holz vor Schadorganismen durch Ausbringen von behandelten flexiblen Flächengebilden mit dem eben beschriebenen Verfahren, wobei die Wirksamkeit der behandelten flexiblen Flächengebilde durch Kontrolle und/oder Überwachung der Schadorganismen sichergestellt wird. Die flexiblen Flächengebilde sind dabei mit dem Herbizid, Fungizid und/oder einem Abwehrmittel behandelt.

Dabei werden über die Mittel zur Überwachung der Schadorganismen, beispielsweise über Pheromonfallen, die sich innerhalb und außerhalb des flexiblen Flächengebildes befinden genutzt.

In einer bevorzugten Ausführungsform wird ergänzend die Anzahl an Schadinsekten durch Prädatoren gering gehalten. Dazu weist das flexible Flächengebilde Mittel zur Steuerung und Überwachung von Prädatoren auf.

Die behandelten flexiblen Flächengebilde werden bevorzugt nach Ablauf einer vorgegebenen Zeit und/oder bei nachlassender Wirksamkeit ausgetauscht. Üblicherweise ist ein Austausch erst nach etwa einem Jahr erforderlich.

Ist ein Wechsel des flexiblen Flächengebildes erforderlich, ist es bevorzugt, diesen mit Hilfe der erfindungsgemäßen Vorrichtung durchzuführen. Dabei wird die Vorrichtung an eine Giebelseite eines mit einem flexiblen Flächengebilde bedeckten Holzpolters bewegt und das flexible Flächengebilde mit einer leeren Kartusche verbunden. Anschließend wird das flexible Flächengebilde aufgewickelt, wobei gegebenenfalls die Vorrichtung über den Holzpolter bewegt wird.

In einer bevorzugten Ausführungsform der Erfindung ist das flexible Flächengebilde mit mindestens einem insektiziden Wirkstoff vorbehandelt. In einer besonders bevorzugten Ausführungsform wird darüber hinaus als weiterer Wirkstoff ein Pheromon aufgebracht. Beide Wirkstoffe können vorab aufgebracht sein, vor Ort appliziert werden oder zum Teil vorab und zum Teil vor Ort aufgebracht werden.

In einer weiteren Ausführungsform der Erfindung wird das flexible Flächengebilde zusammen mit einem Trägermaterial, z.B. einem stabilisierenden Kunststoff-Netz auf die Holzpoltern aufgebracht. Dabei kann das flexible Flächengebilde zusammen mit einem polymeren Trägermaterial, welches die mechanische Stabilität des flexiblen Flächengebildes erhöht, auf die Holzpolter aufgebracht werden.

Das flexible Flächengebilde kann vorbehandelt sein oder vor Ort behandelt werden mit einer Zusammensetzung, die mindestens eine pestizide Komponente (P) und mindestens ein polymeres Bindemittel (B) enthält. Die auf das flexible Flächengebilde aufgebrachte Zusammensetzung enthält bevorzugt 0,1 bis 95 Gew.-% mindestens eines Pestizids (P) und 5 bis 99 Gew.-% mindestens eines Bindemittels (B).

Die auf das flexible Flächengebilde aufgebrachte Zusammensetzung enthält insbesondere 0,1 bis 40 Gew.-% mindestens eines Pestizids (P) und 5 bis 95 Gew.-% mindestens eines Bindemittels (B).

Als Pestizid-Komponente (P) wird gerne ein Insektizid aus der Gruppe der Pyrethroide, Carbamat-Verbindungen oder Organo-Phosphor-Verbindungen eingesetzt.

Als Bindemittel (B) wird häufig ein Polymer eingesetzt aus der Gruppe: Polyacrylate, Polymethacrylate, Polyacrylnitrile, Polystyrole, Polymethylstyrole, Polybutadiene, Polyvinylacetate, Polyvinylalkohole und Copolymere erhalten durch Polymerisation von mindestens zwei, Ethylengruppen enthaltenden Monomeren.

In einer besonderen Ausführungsform der Erfindung wird zusätzlich zu dem flexiblen Flächengebilde eine Insekten-anziehende Vorrichtung eingesetzt, die zusammen mit dem flexiblen Flächengebilde befestigt werden kann. Diese kann z.B. eine Pheromon-Falle sein.

Als Flächengebilde eignen sich beispielsweise Textilmaterialien, nicht-textile Kunststoffmaterialien, Papier, Leder, Kunstleder, Folien und andere flexible Materialien.

Bei dem eingesetzten Flächengebilde handelt es sich bevorzugt um ein Textilmaterial, insbesondere Netze aus Textilfasern. Es kann sich hierbei um Netze aus natürlichen Fasern oder aus synthetischen Fasern handeln. Selbstverständlich kann es sich auch um Mischungen zweier oder mehrerer verschiedener Fasern handeln. Beispiele für natürliche Fasern umfassen Baumwoll-, Jute- oder Leinenfasern. Bevorzugt handelt es sich um synthetische Fasern aus geeigneten Polymeren. Beispiele umfassen Polyamide, Polyester, Polyacrylnitril oder Polyolefine. Bevorzugt handelt es sich um Polyamide, Polyolefine und Polyester, besonders bevorzugt um Polyolefine, insbesondere Polypropylen oder Polyethylen, und Polyester. Ganz besonders bevorzugt sind Polyesterfasern, insbesondere Polyethylenterephthalat (PET).

Bei den Fasern kann es sich um Mono-, Oligo- oder Multifilamente handeln, die glatt oder texturiert sein können.

Bei Polypropylen und Polyethylen kann es sich um Polypropylen- bzw. Polyethylen-Homopolymere handeln. Es kann sich aber auch um Copolymere handeln, welche neben dem Ethylen bzw. Propylen geringe Mengen anderer Comonomere umfassen. Bei geeigneten Comonomeren kann es sich insbesondere um andere Olefine wie beispielsweise Ethylen oder Propylen sowie 1-Buten, 2-Buten, Isobuten, 1-Penten, 1-Hexen, 1-Hepten, 1-Octen, Styrol oder α-Methylstyrol, Diene und/oder Polyene handeln. Der Anteil von Comonomeren im Polyethylen bzw. Polypropylen beträgt im Allgemeinen maximal 20 Gew.-%, bevorzugt maximal 10 Gew.-%. Art und Menge der Comonomere werden vom Fachmann je nach den gewünschten Eigenschaften der Faser gewählt.

Besonders bevorzugt zur Faserherstellung sind relativ hochmolekulare, zähfließende Produkte, welche in üblicher Art und Weise durch Ihren Schmelzflussindex (bestimmt nach ISO 1133) charakterisiert werden. Bevorzugt kann es sich um mindestens ein Polypropylen bzw. Polyethylen mit einem Schmelzflussindex MFR (230°C, 2,16 kg) von 0,1 bis 60 g / 10 min handeln. Bevorzugt handelt es sich um Polypropylen mit einem Schmelzflussindex MFR (230°C, 2,16 kg) von 1 bis 50 g / 10 min, besonders bevorzugt 10 bis 45 g / 10 min und beispielsweise 30 bis 40 g / 10 min. Derartige Polypropylensorten eignen sich besonders zur Herstellung von Fasern. Selbstverständlich kann auch eine Mischung mehrerer verschiedener Sorten von Polypropylen eingesetzt werden.

Die Textilfasern weisen je nach der Art des Netzes eine Dicke von 0,05 bis 0,6 mm auf, bevorzugt 0,1 mm bis 0,4 mm, besonders bevorzugt 0,12 bis 0,35 mm und ganz besonders bevorzugt 0,2 bis 0,3 mm.

Die bevorzugt eingesetzten Netze weisen bevorzugt ein Muster von Maschen mit einer geraden Anzahl von Ecken auf. Die Netze können hierbei bevorzugt nur aus einer einzigen Sorte von Maschen bestehen, beispielsweise nur aus viereckigen oder nur aus sechseckigen Maschen, oder sie können auch zwei oder mehrere Sorten verschiedener Maschen umfassen, beispielsweise eine Kombination aus achteckigen und viereckigen Maschen.

Die Maschen des Netzes sollten hierbei bevorzugt im Wesentlichen gleichartig sein, d.h. dass das Netz zwar durchaus kleinere Abweichungen im Hinblick auf Form und die Größe der Maschen aufweisen kann, dass die Werte aber um die Mittelwerte nicht übermäßig stark streuen.

Je nach Verwendungszweck kann die Maschenweite des Netzes variiert werden, beispielsweise von 0,5 mm bis 25 mm. Geeignete Maschengrößen (Seitenlänge einer quadratischen Masche) sind im Bereich von 5 mm, vorzugsweise 2,5 mm, insbesondere 1,5 mm als Obergrenze und 0,1 mm, vorzugsweise 0,25 mm, besonders bevorzugt 0,5 mm, insbesondere 0,7 mm als Untergrenze.

Die Maschen des Netzes werden bevorzugt ausgewählt aus der Gruppe von viereckigen, sechseckigen oder achteckigen Maschen.

Weitere geeignete flexible Flächengebilde sind z.B. in der WO 2011/003861 beschrieben.

In einer Ausführungsform des erfindungsgemäßen Verfahrens wird als flexible Flächengebilde ein natürliches oder synthetisches textiles Material (z.B. ein Baumwolle- oder Polyestergewebe), eine Kunststofffolie (z.B. aus Polypropylen, Polyethylen, Polystyrol, oder Cellulose) oder ein Cellulose enthaltendes Netz verwendet.

Das flexible Flächengebilde ist vorzugsweise mit mindestens einer pestiziden Komponente (P), insbesondere mindestens einem insektiziden Wirkstoff (I) vorbehandelt. Es kann jedoch auch vor Ort, also z.B. im Wald, mit dem Wirkstoff behandelt werden. Als pestizide Komponente (P) werden bevorzugt Insektizide (I) eingesetzt, ggf. auch in Kombination mit weiteren pestiziden Komponenten wie z.B. Fungiziden (F) oder Herbiziden (H). Möglich ist es auch, die flexiblen Flächengebilde ausschließlich mit einem oder mehreren Fungiziden und/oder einem oder mehreren Herbiziden zu imprägnieren, um beispielsweise einen Pilz- oder Moosbefall zu verhindern.

Als Insektizide kommen insbesondere die folgenden bereits bekannten Wirkstoffe in Frage (siehe "The Pesticide Manual", Edition 2006, E. C. Tomlin):

### 1) Acetylcholinesterase (AChE) Inhibitoren

Carbamate,
zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb und Triazamate.

Organophosphate,
zum Beispiel Acephate, Azamethiphos, Azinphos(-methyl,-ethyl), Bromophos-ethyl, Bromfenvinfos(-methyl), Butathiofos, Cadusafos, Carbophenothion, Chlorethoxyfos, Chlorfenvinphos, Chlormephos, Chlorpyrifos(-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, lodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemetonmethyl, Parathion(-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon und Vamidothion.

### 2) Natrium-Kanal-Modulatoren/Spannungsabhängige Natrium-Kanal-Blocker

Pyrethroide,
zum Beispiel Acrinathrin, Allethrin (d-cis-trans, d-trans)ₛ Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta), Cyphenothrin, Deltamethrin, Empenthrin, (IR-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (IR-transisomer), Prallethrin, Profluthrin, Protrifenbute, Pyresmethrin, Resmethrin, RU 15525, Silafluofen, Tau-Fluvalinate, Tefluthrin, Terallethrin, Tetramethrin(-IR-isomer), Tralomethrin, Transfluthrin, ZXI 8901 und Pyrethrine(pyrethrum).
DDT
Oxadiazine,
zum Beispiel Indoxacarb.

### 3) Acetylcholin-Rezeptor-Agonisten/-Antagonisten

Chloronicotinyle,
zum Beispiel Acetamiprid, Clothianidin, Dinotefuran, Imidacloprid, Nitenpyram, Nithiazine, Thiacloprid, Thiamethoxam, Nicotine, Bensultap und Cartap

### 4) Acetylcholin-Rezeptor-Modulatoren

Spinosyne, zum Beispiel Spinosad

### 5) GABA-gesteuerte Chlorid-Kanal-Antagonisten

Organochlorine,
zum Beispiel Camphechlor, Chlordane, Endosulfan, Gamma-HCH, HCH, Heptachlor, Lindan und Methoxychlor,
Fiprole,
zum Beispiel Acetoprole, Ethiprole, Fipronil, Pyrafluprole, Pyriprole und Vaniliprole.

### 6) Chlorid-Kanal-Aktivatoren

Mectine,
zum Beispiel Avermectin, Emamectin, Emamectin-benzoate, Ivermectin und Milbemcycin.

### 7) Juvenilhormon-Mimetika,

zum Beispiel Diofenolan, Epofenonane, Fenoxycarb, Hydroprene, Kinoprene, Methoprene, Pyriproxifen und Triprene.

Bevorzugt werden solche Insektizide eingesetzt, die gegen Holzschädlinge, insbesondere gegen rinden- und holz-brütenden Käferarten wirksam sind. Dazu gehören beispielsweise Wirkstoffe wie die Pyrethroide (z.B. Alpha-Cypermethrin). Auch geeignet sind Fipronil, Amidrazone und Chlorfenapyr.

Eine weitere Ausführungsform der Erfindung betrifft ein Verfahren, bei dem das flexible Flächengebilde mit mindestens einem insektiziden Wirkstoff (I) vorbehandelt ist, und darüber hinaus als weiterer Wirkstoff ein Pheromon aufgebracht wird. Dabei kann das Pheromon auf das das Netz appliziert sein oder werden, es kann aber auch direkt auf den Holzpoltern angebracht werden.

Das flexible Flächengebilde kann in einer weiteren Ausführungsform auch zusammen mit einem Trägermaterial (T) auf die Holzpolter aufgebracht werden. Dabei ist es z.B. möglich, dass ein imprägniertes textiles Material zusammen mit einem polymeren Trägernetz auf die Holzpolter aufgebracht wird. Beide Komponenten können z.B. zusammen auf einer Rolle antransportiert und dann vor Ort über den Holzpoltern ausgerollt werden.

Das flexible Flächengebilde wird gerne zusammen mit einem polymeren Trägermaterial (T) eingesetzt, welches die mechanische Stabilität des Netzes erhöht.

Auf diese Weise ist die Chance einer Wiederverwendung der Schutzvorrichtung auch nach längerem Einsatz, z.B. nach mehreren Monaten bei Wind und Wetter, erhöht.

Das flexible Flächengebilde ist vorzugsweise entweder vorbehandelt oder wird vor Ort behandelt mit einer Zusammensetzung, die mindestens eine pestizide Komponente (P) und mindestens ein polymeres Bindemittel (B) enthält. Eine Aufgabe des Bindemittels ist es, die dauerhafte Bindung des Wirkstoffs an das flexible Flächengebilde zu verbessern. Auch soll es eine möglichst gleichmäßige Freisetzung des Wirkstoffes ermöglichen.

Als derartiges Bindemittel (B) kann z.B. ein Polymer eingesetzt werden, beispielsweise aus der Gruppe der Polyacrylate, Polymethacrylate, Polyacrylnitrile, Polystyrole, Polymethylstyrole, Polybutadiene, Polyvinylacetate, Polyvinylalkohole und der Copolymere, erhalten durch Polymerisation von mindestens zwei Ethylengruppen enthaltenden Monomeren.

Die Auswahl der pestiziden Komponente (P) und des Bindemittels (B) sowie die eingesetzten Mengen sollten aufeinander und auf den Einsatzzweck abgestimmt sein.

In einer bevorzugten Ausführungsform enthält die auf das flexible Flächengebilde aufgebrachte Zusammensetzung 0,1 bis 95 Gew.-%, insbesondere 0,1 bis 90 Gew.-%, bevorzugt 0,1 bis 40 Gew.-%, mindestens eines Pestizids (P). Sie enthält ferner 0,1 bis 99 Gew.-% insbesondere 0,5 bis 90 Gew.-%, bevorzugt 0,5 bis 40 Gew.-% mindestens eines Bindemittels (B). Eine besondere Ausführungsform der Zusammensetzung enthält 0,1 bis 1 Gew.-% an Insektizid (z.B. alpha-Cypermethrin) und 0,5 bis 1,5 Gew.-% an Bindemittel.

Bei dem erfindungsgemäßen Verfahren wird bevorzugt als Pestizid-Komponente (P) ein Insektizid (I) aus der Gruppe der Pyrethroide, Carbamat-Verbindungen oder Organo-Phosphor-Verbindungen eingesetzt.

Diese Insektizide können vorzugsweise mit einem Bindemittel (B) kombiniert werden aus der Gruppe der Polyacrylate, Polymethacrylate, Polyacrylnitrile, Polystyrole, Polymethylstyrole, Polybutadiene, Polyvinylacetate, Polyvinylalkohole und Copolymere erhalten durch Polymerisation von mindestens zwei, Ethylengruppen enthaltenden Monomeren.

Als Insekten-abweisende Komponenten können zusätzlich z.B. auch folgende Wirkstoffe bei dem erfindungsgemäßen Verfahren bzw. der Vorrichtung eingesetzt werden:
N,N'-Diethyl-meta-toluamid (DEET), N,N-diethylphenylacetamid (DEPA), 1-(3-cyclo-hexan-1-yl-carbonyl)-2-methylpiperin, (2-hydroxymethylcyclohexyl) acetic acid lactone, 2-ethyl-1,3-hexandiol, indalon, Methylneodecanamid (MNDA), {+/-)-3-allyl-2-methyl-4-oxocyclopent-2-(+)-enyl-(+)-transchrysantemat (Esbiothrin), Limonen, Eugenol, (+)Eucamalol (1), (-)-1-epi-Eucamalol, Extrakte von Eucalyptus maculata, Vitex rotundifolia, Cymbopogan martinii, Cymbopogan citratus, Cymopogan nartdus, Ethylbutylacetylaminopropionat oder Icaridin(1-piperidinecarboxylicacid-2-(2-hydroxyethyl)-1-methylpropylester).

Diese bereits genannten Insekten-abweisenden Substanzen und die nachfolgend aufgeführten Fungizide, können beispielsweise bereits vorab auf dem flexiblen Flächengebilde aufgebracht werden, beispielsweise durch Besprühen eines textilen Materials. Es ist jedoch auch möglich, diese Komponenten erst vor Ort aufzubringen.

Als zusätzliches Pestizid können bei dem erfindungsgemäßen Verfahren z.B. folgende, bereits bekannte Fungizide verwendet werden:
1) Azole: Bitertanol, Bromoconazole, Cyproconazole, Difenoconazole, Dinitroconazole, Epoxiconazole, Fenbuconazole, Fluquiconazole, Flusilazole, Flutriafol, Hexaconazole, Imazalil, Ipconazole, Metconazole, Myclobutanil, Penconazole, Propiconazole, Prochloraz, Prothioconazole, Simeconazole, Tebuconazole Tetraconazol, Triadimefon, Triadimenol, Triflumizol, Triticonazol;
2) Strobilurine: Azoxystrobin, Dimoxystrobin, Fluoxastrobin, Kresoxim-methyl, Metominostrobin Orysastrobin, Picoxystrobin, Pyraclostrobin und Trifloxystrobin; Acylalanines wie Benalaxyl, Metalaxyl, Mefenoxam, Ofurace, Oxadixyl; Aminderivate wie Aldimorph, Dodine, Dodernorph, Fenpropimorph, Fenpropidin, Guazatine, Iminoctadine, Spiroxamin, Tridemorph;
3) Anilinopyrimidine: Pyrimethanil, Mepanipyrim, Cyprodinil; Dicarboximide wie Iprodion, Myclozolin, Procymidon, Vinclozolin; Cinnamic Amide und Derivate wie Dimethomorph, Flumetover, Flumorph; Antibiotika wie Cycloheximide, Griseofulvin, Kasugamycin, Natamycin, Polyoxin, Streptomycine;
4) Dithiocarbamate: Ferbam, Nabam, Maneb, Mancozeb, Metam, Metiram, Propineb, Polycarbamat, Thiram, Ziram Zineb;
5) Heterozyclen: Anilazin, Benomyl, Boscalid, Carbendazim, Carboxin, Oxycarboxin, Cyazofamid, Dazomet, Dithianon, Famoxadon, Fenamidon, Fenarimol, Fuberidazol, Flutolanil, Flurametpyr, Isoprothiolan, Mepronil, Nuarimol, Picobenzamid, Probenazol, Proquinazid, Pyrifenox, Pyroquilon, Quinoxyfen, Silthiofam, Thiabendazol, Thifluzamid, Thiophanat-methyl, Tiadinil, Tricyclazol, Triforine;
6) Nitrophenylderivate: Binapacryl, Dinocap, Dinobuton, Nitrophthalisopropyl;
7) Phenylpyrrole: Fenpiclonil, Fludioxonil;
8) Derivate der Sulfonsäure: Captafol, Captan, Dichlofluanid, Folpet, Tolylfluanid;
9) Weitere Fungizide: Acibenzolar-S-methyl, Benthiavalicarb, Carpropamid, Chlorothalonil, Cyflufenamid, Cymoxanil, Dazomet, Diclomezin, Diclocymet, Diclofluanid, Diethofencarb, Edifenphos, Ethaboxäm, Fenhexamid, Fentin-Acetat, Fenoxanil, Ferimzone, Fluazinam, Fosetyl, Fosetyl-Aluminium, Phosphoric Acid, Iprovalicarb, Hexachlorbenzene, Metrafenon, Pencycuron, Propamocarb, Phthalid, Toloclofosmethyl, Quintozene, Zoxamid.

Als erfindungsgemäß eingesetzte Herbizide eignen sich beispielsweise Chlorothalonil, Dichlofluanide, Tolylfluanide, Diuron, Picolinafen und Dithianon.

### Zeichnungen

Anhand der Zeichnungen wird die Erfindung nachfolgend detaillierter beschrieben.

Es zeigt:
- Figur 1: die erfindungsgemäße Vorrichtung in einer Ansicht von der Seite,
- Figur 2: die erfindungsgemäße Vorrichtung montiert auf einem Kranrückezug vor dem Ausbringen des Netzes in einer Ansicht von Vorne,
- Figur 3: die erfindungsgemäße Vorrichtung beim Ausbringen des Netzes in einer Ansicht von Vorne,
- Figur 4: die erfindungsgemäße Vorrichtung nach dem Ausbringen des Netzes in einem transportbereiten Zustand.

### Ausführungsformen

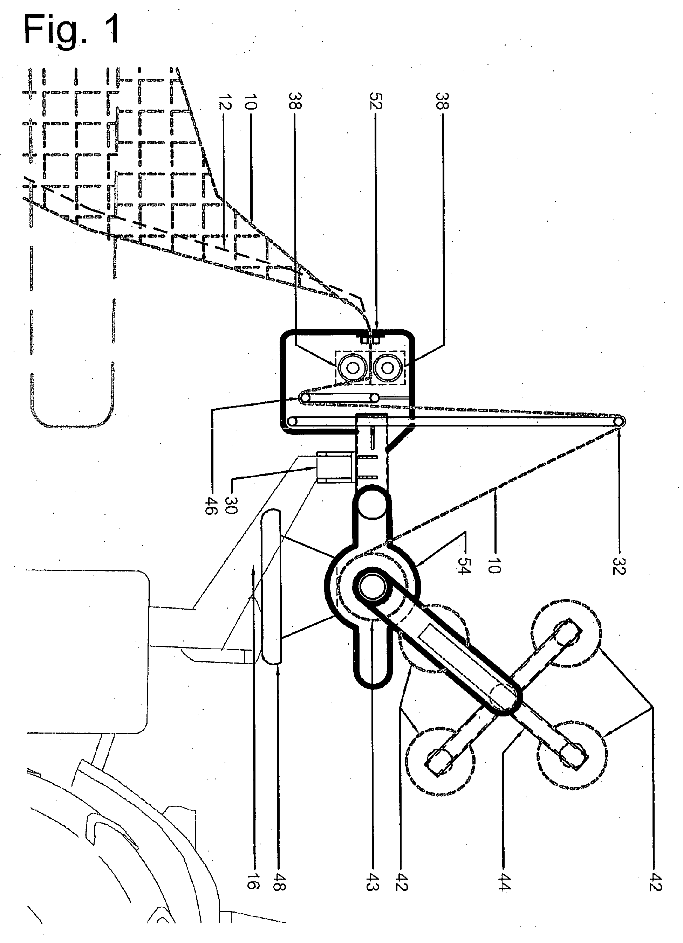

Figur 1 zeigt die erfindungsgemäße Vorrichtung zum Ausbringen von flexiblen Flächengebilden montiert auf einen Kranrückezug.

Die erfindungsgemäße Vorrichtung zum Ausbringen von flexiblen Flächengebilden ist mit einer universellen Kupplung 30 an einem Kran 16 eines Kranrückezugs montiert. Die Kupplung 30 ist bevorzugt so ausgeführt, dass sich die Vorrichtung mit allen gängigen Traktoren Forwardern, Rückezügen und Zugmaschinen verbinden lässt. Die Vorrichtung umfasst in der dargestellten Ausführungsform vier Kartuschen 42, in denen gefaltete Netze 10 aufgenommen sind. In anderen Ausführungsformen sind in den Kartuschen Folien oder andere flexible Flächengebilde aufgenommen. Je nach Anforderung kann die Vorrichtung auch zur Aufnahme von mehr als vier Kartuschen oder einer geringeren Anzahl Kartuschen eingerichtet werden. Die Netze haben ausgerollt und entfaltet Abmessungen zwischen zwei und zehn Metern in der Breite und eine Länge von 10 bis ca. 100 Metern. Durch mehrfaches Falten ist die Breite des aufgerollten Netzes in der Kartusche auf 2 Meter reduziert. Durch andere Falttechniken sind jedoch auch andere Breiten denkbar. Die Kartuschen 42 sind an einem als Autoladevorrichtung ausgeführten Kartuschenwechsler 44 aufgenommen, der durch Drehung jeweils eine andere Kartusche 42 in den Bereich einer Abrolleinheit 54 bringt. Zum Einlegen einer Kartusche 42 in die Abrolleinheit 54 wird die Kartusche vom Kartuschenwechsler 44 über die Abrolleinheit bewegt. Anschließend wird die Kartusche 42 entriegelt und gleitet durch die Schwerkraft in die Abrolleinheit 54 und die in der Kartusche 43 enthaltene Walze, auf die das Netz 10 aufgewickelt ist, wird mit einem Motor verbunden. Diese Verbindung wird bevorzugt über eine hydraulisch betriebene Mechanik hergestellt. In einer anderen Ausführungsform wird das Fixieren der Kartusche und das Verbinden der enthaltenen Walze mit dem Antrieb der Abrolleinheit 54 manuell durchgeführt. Das Netz 10 wird aus der Kartusche 43 in der Abrolleinheit 54 entnommen und über den Spreizer 32 geführt. Der Spreizer 32 weist eine gebogene Form auf, durch die das Netz 10 ausgebreitet wird, sobald auf das Netz 10 Zugkräfte einwirken. Das Netz 10 wird weiter über einen Umlenkpunkt 46 und durch zwei angetriebene Walzen 38 sowie durch die Schneidevorrichtung 52 geführt. Anschließend wird das Netz 10 mit einer beschwerten Schnur 12 zu Boden gezogen. Mit der Schneidevorrichtung 52 kann das Netz in der benötigten Länge abgeschnitten werden. Die Schneidevorrichtung 52 wird bevorzugt als Rollmesser ausgeführt, in einer weiteren Ausführungsform ist die Schneidevorrichtung als hydraulische Schere ausgeführt. An der Unterseite der Vorrichtung befindet sich ein Trichter 48, mit dem sich ein ausgebrachtes Netz zusammenschieben lässt, um es wieder auf eine Kartusche 42 aufzurollen.

In der in Figur 1 dargestellten Ausführungsform wird die beschwerte Schnur 12 zusammen mit dem Netz 10 aus der Kartusche 43 abgerollt und ebenfalls mit der Schneidevorrichtung 52 abgeschnitten. In einer weiteren Ausführungsform der Erfindung wird die beschwerte Schnur 12 auf zwei Rollen mitgeführt, eine auf jeder Seite der Vorrichtung, und wird von einem Motor synchron mit dem Netz 10 abgerollt. In einer weiteren Ausführungsform der Erfindung wird die beschwerte Schnur 12 von einer eigenen Schneidevorrichtung, beispielsweise einem Hydraulikcutter, abgeschnitten.

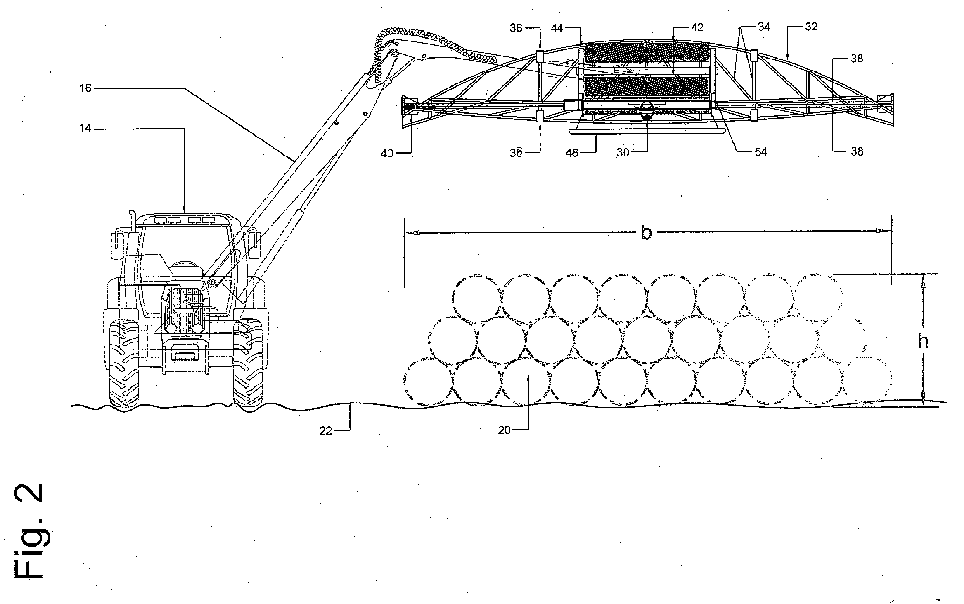

Figur 2 zeigt die erfindungsgemäße Vorrichtung, die mit einem Kranrückezug an eine Giebelseite eines Holzpolters bewegt wurde.

Die erfindungsgemäße Vorrichtung ist über die universelle Kupplung 30 mit dem Kran 16 eines Kranrückezuges 14 verbunden. Durch den Kran 16 ist die Vorrichtung an eine Giebelseite eines Holzpolters 20 bewegt worden. Der Holzpolter weist eine typische Höhe h zwischen 0,5 bis 15 Metern und eine typische Breite b von 1 bis 12 Metern auf. Die Länge eines Holzpolters liegt typischerweise zwischen 2 und 100 Metern. Der Kartuschenwechsler 44 und die Kartuschen 42 sind in der in Figur 2 gezeigten Ansicht vor dem Spreizer 32 montiert. Der Spreizer 32 ist in der in Figur 2 dargestellten Ausführungsform auf Netze mit einer Breite von bis zu 8 Metern eingerichtet und weist eine Breite von etwa 8,5 Metern auf. Der Spreizer 32 ist so ausgeführt, dass er über die Scharniere 36 für den Transport eingeklappt werden kann. Dadurch lässt sich die Breite des Spreizers 32 für den Transport auf etwa die Hälfte der ursprünglichen Breite reduzieren. In der dargestellten Ausführungsform ist der Spreizer 32 aus Hohlprofilen aufgebaut. Ein Fachwerk 34 verstärkt die Konstruktion des Spreizers 32. An der Unterseite der Vorrichtung befindet sich der Trichter 48, mit dem sich ein ausgebrachtes Netz wieder auf eine leere Kartusche 42 aufrollen lässt. An einer Seite des Spreizers 32 ist ein Motor 40 angeordnet, um die in der gezeigten Ansicht hinter dem Spreizer 32 liegenden Walzen 38 anzutreiben.

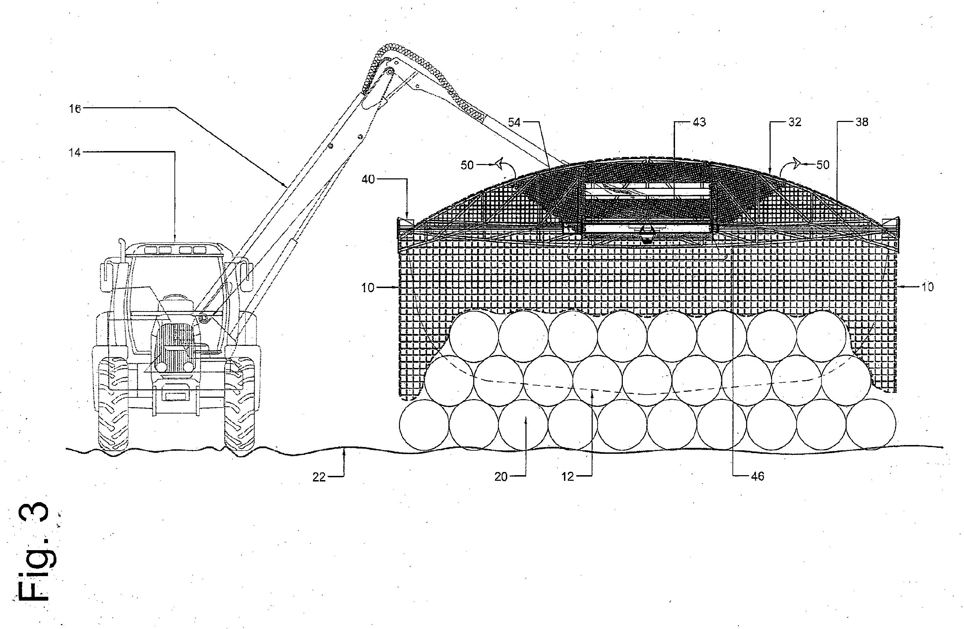

Figur 3 zeigt die erfindungsgemäße Vorrichtung beim Ausbringen eines flexiblen Flächengebildes in einer Ansicht von Vorne.

In Figur 3 ist dargestellt, wie mit Hilfe der soeben beschriebenen Vorrichtung ein Netz 10 auf einen Holzpolter 20 ausgebracht wird. Die Vorrichtung ist über die universelle Kupplung 30 am Kran 16 des Kranrückezuges 14 befestigt, und wird von diesem über den Holzpolter 20 hinwegbewegt. Das Netz 10 wird mit der Abrolleinheit 54 aus der Kartusche 43 entnommen und über den Spreizer 32 geführt. Durch auf das Netz 10 einwirkende Zugkräfte wird das Netz 10 in die mit dem Bezugszeichen 50 versehene Richtung gespreizt und/oder entfaltet. Von dort wird das Netz 10 von den angetriebenen Walzen 38 über einen Umlenkpunkt 46 gezogen und passiert die Schneidevorrichtung 52, bevor das Netz 10 durch sein eigenes Gewicht bzw. das Gewicht der beschwerten Schnur 12 in Richtung des Bodens 22 fällt. Dabei wird der Holzpolter 20 von Netz 10 abgedeckt. An den Seiten des Holzpolters 20 wird das Netz 10 durch das Gewicht einer beschwerten Schnur 12 zum Boden 22 gezogen. Während des Abrollens des Netzes 10 wird die Vorrichtung vom Kranrückezug 14 über den Holzpolter 20 bewegt. Bevorzugt stimmt die Geschwindigkeit der Bewegung der Vorrichtung mit der Abrollgeschwindigkeit des Netzes 10 überein.

Soll das Netz 10 vom Holzpolter 20 entfernt werden, kann die erfindungsgemäße Vorrichtung zum Aufrollen des Netzes 10 verwendet werden. Dazu wird der Vorrichtung an eine Giebelseite des Holzpolters 20 bewegt, und das Netz 10 wird über den Trichter 48 zu einer leeren Kartusche 42 geführt. In einer bevorzugten Ausführungsform sind an der Kartusche 42 Klemmen und/oder Klammern angeordnet, um das Netz 10 festzuhalten. Anschließend wird das Netz 10 aufgerollt, während die Vorrichtung gleichzeitig über den Holzpolter 20 hinwegbewegt wird.

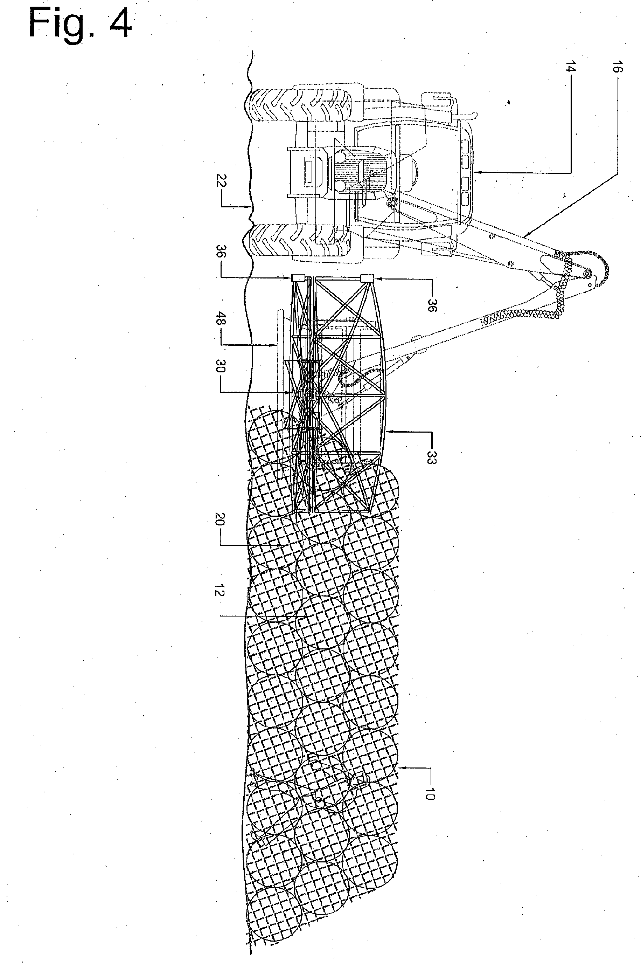

Figur 4 zeigt die für den Abtransport bereite Vorrichtung sowie einen vollständig von einem Netz bedeckten Holzpolter.

In der Figur 4 ist die erfindungsgemäße Vorrichtung nach dem vollständigen Abdecken eines Holzpolters 20 mit einem Netz 10 dargestellt. Nach dem Abdecken des Holzpolters 20 wurde das Netz 10 und die beschwerte Schnur 12 mit der Schneidevorrichtung 52 in der erforderlichen Länge abgeschnitten. In einer Ausführungsform des erfindungsgemäßen Verfahrens werden die Enden der beschwerten Schnüre 12 nach dem Abdecken des Holzpolters 20 miteinander verknotet.

Die erfindungsgemäße Vorrichtung ist über die universelle Kupplung 30 mit dem Kran 16 des Kranrückezuges 14 verbunden, und wurde vom Holzpolter 20 wegbewegt. Für einen leichten Abtransport der Vorrichtung wurde der Spreizer 33 über die Scharniere 36 eingeklappt, um dessen Breite auf etwa die Hälfte der ursprünglichen Breite zu reduzieren.

In einer weiteren Ausführungsform der erfindungsgemäßen Vorrichtung sind anstelle der Scharniere 36 Schienen am Spreizer 32 angeordnet, über die Teile des Spreizers 32 gegeneinander verschoben werden können.

In einer anderen Ausführungsform der Erfindung weist der Spreizer 32 der Vorrichtung teleskopartig zusammenschiebbare Profilteile auf, über die die Breite des Spreizers 32 für den Transport reduziert werden kann.

## Patentansprüche

1. Vorrichtung zum Ausbringen von flexiblen Flächengebilden (10) auf zu schützende Bereiche, umfassend eine universelle Kupplung (30) zur Verbindung mit einer Zugmaschine, einem Rückezug oder einem Traktor (14), mindestens eine Kartusche (42, 43) mit einem flexiblen Flächengebilde (10), einen Spreizer (32) und eine angetriebene Walze (38) zum Aufrollen oder Abrollen des flexiblen Flächengebildes (10) **dadurch gekennzeichnet, dass** die Vorrichtung des Weiteren Mittel zum Abrollen eines länglichen schweren Materials (12), Mittel (52) zum Schneiden des flexiblen Flächengebildes (10) und zum Schneiden des länglichen schweren Materials (12) umfasst, so dass das ausgebrachte flexible Flächengebilde (10) mit einer Beschwerung versehen ist.

2. Vorrichtung nach Anspruch 1, wobei die Vorrichtung mindestens zwei Kartuschen (42, 43) umfasst und die Vorrichtung des weiteren Mittel (44) zum Wechseln der Kartuschen (42, 43) aufweist.

3. Vorrichtung nach Anspruch 1 oder 2, wobei die mindestens eine Kartusche (42, 43) das flexible Flächengebilde (10) in einem zusammengelegten, zusammengefalteten und/oder zusammengedrückten Zustand aufnimmt.

4. Vorrichtung nach einem der vorherigen Ansprüche, wobei die Mittel zum Abrollen eines länglichen schweren Materials (12) als Mittel zum Abrollen einer beschwerten Schnur oder eines Drahts ausgeführt sind.

5. Vorrichtung nach einem der Ansprüche 1-4, wobei die Mittel zum Abrollen eines länglichen schweren Materials (12) dazu eingerichtet sind, das längliche schwere Material (12) gleichzeitig und gegebenenfalls synchron mit dem flexiblen Flächengebilde (10) abzurollen.

6. Vorrichtung nach einem der vorhergehenden Ansprüche, wobei der Spreizer (32) als gebogener Ausleger ausgeführt ist und wobei der Ausleger in der Mitte den höchsten Punkt aufweist und zu den Seiten abfällt oder in der Mitte den niedrigsten Punkt aufweist und zu den Seiten ansteigt.

7. Vorrichtung nach einem der Ansprüche 1 bis 6, wobei der Spreizer (32) als gebogene Fläche ausgeführt ist und wobei die Fläche in der Mitte den höchsten Punkt aufweist und zu den Seiten abfällt oder in der Mitte den niedrigsten Punkt aufweist und zu den Seiten ansteigt.

8. Vorrichtung nach einem der Ansprüche 1 bis 7, wobei der Spreizer (32) Führungselemente umfasst.

9. Vorrichtung nach Anspruch 8, wobei die Führungselemente als Rollen oder Stangen ausgeführt sind.

10. Vorrichtung nach einem der vorhergehenden Ansprüche, wobei der Spreizer (32) zumindest Teilweise aus Profilteilen aufgebaut ist.

11. Vorrichtung nach einem der vorherigen Ansprüche, wobei der Spreizer (32) als Fachwerk (34), als Rauten, als Gitter und/oder mit einfach/doppelten/mehrfachen. Querverstrebungen ausgeführt ist.

12. Vorrichtung nach einem der vorhergehenden Ansprüche, wobei der Spreizer (32) faltbar ausgeführt ist und/oder teleskopartig zusammengeschoben werden kann.

13. Vorrichtung nach einem der vorhergehenden Ansprüche, wobei die mindestens eine Kartusche (42, 43) Klammern und/oder Klemmen aufweist

14. Vorrichtung nach einem der vorhergehenden Ansprüche, wobei das flexible Flächengebilde (10) als Netz ausgeführt ist wobei das Netz (10) entweder unbehandelt ist oder mit einem Insektizid, Herbizid, Fungizid und/oder einem Abwehrmittel behandelt ist.

15. Vorrichtung nach einem der vorhergehenden Ansprüche, weiter umfassend Pheromonfallen zur Überwachung von Schadinsekten.

16. Vorrichtung nach einem der vorhergehenden Ansprüche, weiter umfassend Lockstoffe zur Steuerung und Kontrolle von Prädatoren.

17. Verfahren zum Ausbringen von flexiblen Flächengebilden (10) auf zu schützenden Bereiche, umfassend die Schritte
a) Koppeln einer Vorrichtung gemäß einem der Ansprüche 1 bis 16 an eine Zugmaschine, einen Rückezug oder einen Traktor (14),
b) Entfalten oder Ausfahren des Spreizers (32)
c) Ziehen des flexiblen Flächengebildes (10) über die angetriebene Walze (38) und den Spreizer (32),
d) Bewegen der Vorrichtung an die Seite des zu schützenden Bereichs und gleichzeitiges Abrollen des flexiblen Flächengebildes (10) und eines länglichen schweren Materials (12) während die Vorrichtung über den zu schützenden Bereich bewegt wird und
e) Abschneiden des flexiblen Flächengebildes (10) und des länglichen schweren Materials (12), nachdem der der zu schützende Bereich mit dem flexiblen Flächengebilde (10) bedeckt ist,
wobei die ausgebrachten flexiblen Flächengebilde mit einer Beschwerung versehen sind.

18. Verfahren nach Anspruch 17, wobei das längliche schwere Material (12) eine beschwerte Schnur ist, **dadurch gekennzeichnet, dass** nach Schritt e) die Enden der beschwerten Schnur (12) miteinander verknoten werden.

19. Verfahren nach Anspruch 17 oder 18, wobei das flexible Flächengebilde (10) mit einem Insektizid, Herbizid, Fungizid und/oder einem Abwehrmittel behandelt ist, **dadurch gekennzeichnet, dass** die Wirksamkeit der behandelten flexiblen Flächengebilde (10) durch Kontrolle und/oder Überwachung der Schadorganismen sichergestellt wird.

20. Verfahren nach Anspruch 19, wobei die behandelten flexiblen Flächengebilde (10) nach Ablauf einer vorgegebenen Zeit und/oder bei nachlassender Wirksamkeit ausgetauscht werden.

21. Verfahren nach Anspruch 20, wobei die Verfahrensschritte zum Austauschen eines flexiblen Flächengebildes (10) das Bewegen einer Vorrichtung nach einem der Ansprüche 1 bis 17 an den Rand eines mit einem Netz (10) bedeckten Holzpolters (20), das Verbinden des flexiblen Flächengebildes (10) mit einer leeren Kartusche (43) und das Aufwickeln des flexiblen Flächengebildes (10) bei stillstehender Vorrichtung oder bei gleichzeitiger Bewegung der Vorrichtung über den Holzpolter (20) umfassen.

## Claims

1. A device for deploying flexible sheet materials (10) onto areas to be protected, comprising a universal coupling (30) to be connected to a traction machine, a forwarder or a tractor (14), at least one cartridge (42, 43) with a flexible sheet material (10), a spreader (32) and a driven roll (38) for rolling up or unrolling the flexible sheet material (10),
wherein the device further comprises means for unrolling an elongated heavy material (12), means (52) for cutting the flexible sheet material (10) and for cutting the elongated heavy material (12), so that the deployed flexible sheet material (10) is provided with a weighting.

2. The device according to claim 1, wherein the device comprises at least two cartridges (42, 43), and the device also has means (44) for changing the cartridges (42, 43).

3. The device according to claim 1 or 2, wherein the at least one cartridge (42, 43) receives the flexible sheet material (10) in a consolidated, folded up and/or compressed state.

4. The device according to one of the preceding claims, wherein the means for unrolling an elongated heavy material (12) are formed as means for unrolling a weighted line or a wire.

5. The device according to one of claims 1 - 4, wherein the means for unrolling an elongated heavy material (12) are configured so as to unroll the elongated heavy material (12) simultaneously and optionally synchronously with the flexible sheet material (10).

6. The device according to one of the preceding claims, wherein the spreader (32) is implemented as a curved boom and wherein the boom has the highest point in the middle and falls off toward the sides or has the lowest point in the middle and rises toward the sides.

7. The device according to one of claims 1 to 6, wherein the spreader (32) is implemented as a curved surface and wherein the surface has the highest point in the middle and falls off toward the sides or has the lowest point in the middle and rises toward the sides.

8. The device according to one of claims 1 to 7, wherein the spreader (32) comprises guide elements.

9. The device according to claim 8, wherein the guide elements are formed as rollers or rods.

10. The device according to one of the preceding claims, wherein the spreader (32) is at least partly built up from profiled parts.

11. The device according to one of the preceding claims, wherein the spreader (32) is implemented as a framework (34), as diamonds, as a lattice and/or with single/double/multiple transverse struts.

12. The device according to one of the preceding claims, wherein the spreader (32) is designed to be foldable and/or can be pushed together like a telescope.

13. The device according to one of the preceding claims, wherein the at least one cartridge (42, 43) has clips and/or clamps.

14. The device according to one of the preceding claims, wherein the flexible sheet material (10) is implemented as a net, wherein the net (10) is either untreated or treated with an insecticide, herbicide, fungicide and/or a deterrent agent.

15. The device according to one of the preceding claims, further comprising pheromone traps for monitoring insect pests.

16. The device according to one of the preceding claims, further comprising attractants for controlling and checking predators.

17. A method for deploying flexible sheet materials (10) onto areas to be protected, comprising the steps:
a) coupling a device according to one of claims 1 to 16 to a traction machine, a forwarder or a tractor (14),
b) unfolding or extending the spreader (32),
c) pulling the flexible sheet material (10) over the driven roll (38) and the spreader (32),
d) moving the device to the side of the area to be protected and simultaneously unrolling the flexible sheet material (10) and an elongated heavy material (12) while the device is being moved over the area to be protected, and
e) cutting off the flexible sheet material (10) and the elongated heavy material (12) after the area to be protected has been covered with the flexible sheet material (10),
wherein the deployed flexible sheet material is provided with a weighting.

18. The method according to claim 17, where the elongated heavy material (12) is a weighted line, wherein following step e), the ends of the weighted line (12) are knotted to each other.

19. The method according to claim 17 or 18, where the flexible sheet material (10) is treated with an insecticide, herbicide, fungicide and/or a deterrent agent, wherein the efficacy of the treated flexible sheet material (10) is ensured by checking and/or monitoring the harmful organisms.

20. The method according to claim 19, wherein the treated flexible sheet material (10) is replaced after the expiry of a predefined time and/or in the event of declining efficacy.

21. The method according to claim 20, wherein the method steps for replacing a flexible sheet material (10) comprise moving a device according to one of claims 1 to 17 to the edge of a wood pile (20) covered with a net (10), connecting the flexible sheet material (10) to an empty cartridge (43) and winding up the flexible sheet material (10) with the device stationary or with simultaneous movement of the device over the wood pile (20).

## Revendications

1. Dispositif pour le déploiement de structures de surface souples (10) sur des zones à protéger, comprenant un couplage universel (30) pour la liaison à une machine de traction, une débardeuse ou un tracteur (14), au moins une cartouche (42, 43) avec une structure de surface souple (10), un écarteur (32) et un rouleau entraîné (38) pour l'enroulement ou le déroulement de la structure de surface flexible (10), **caractérisé en ce que** le dispositif comprend en outre des moyens pour le déroulement d'un matériau lourd allongé (12), des moyens (52) pour le découpage de la structure de surface souple (10) et pour le découpage du matériau lourd allongé (12), de telle manière que la structure de surface souple déployée (10) soit munie d'un lestage.

2. Dispositif selon la revendication 1, dans lequel le dispositif comprend au moins deux cartouches (42, 43) et le dispositif présente en outre des moyens (44) pour l'échange des cartouches (42, 43).

3. Dispositif selon la revendication 1 ou 2, dans lequel ladite au moins une cartouche (42, 43) contient la structure de surface souple (10) dans un état rassemblé, replié et/ou comprimé.

4. Dispositif selon l'une quelconque des revendications précédentes, dans lequel les moyens pour le déroulement d'un matériau lourd allongé (12) sont réalisés sous forme de moyens pour le déroulement d'un cordon ou d'un fil lesté.

5. Dispositif selon l'une quelconque des revendications 1 à 4, dans lequel les moyens pour le déroulement d'un matériau lourd allongé (12) sont conçus pour dérouler le matériau lourd allongé (12) de façon simultanée et éventuellement synchronisée avec la structure de surface souple (10).

6. Dispositif selon l'une quelconque des revendications précédentes, dans lequel l'écarteur (32) est réalisé sous la forme d'un bras courbe et dans lequel le bras présente le point le plus élevé au milieu et descend vers les côtés ou présente le point le plus bas au milieu et remonte vers les côtés.

7. Dispositif selon l'une quelconque des revendications 1 à 6, dans lequel l'écarteur (32) est réalisé sous la forme d'une surface courbe et dans lequel la surface présente le point le plus haut au milieu et descend vers les côtés ou présente le point le plus bas au milieu et remonte vers les côtés.

8. Dispositif selon l'une quelconque des revendications 1 à 7, dans lequel l'écarteur (32) comprend des éléments de guidage.

9. Dispositif selon la revendication 8, dans lequel les éléments de guidage sont réalisés sous forme de rouleaux ou de barres.

10. Dispositif selon l'une quelconque des revendications précédentes, dans lequel l'écarteur (32) est composé au moins partiellement de pièces profilées.

11. Dispositif selon l'une quelconque des revendications précédentes, dans lequel l'écarteur (32) est réalisé sous forme de treillis (34), de losanges, de grille et/ou avec des entretoises transversales simples/doubles/multiples.

12. Dispositif selon l'une quelconque des revendications précédentes, dans lequel l'écarteur (32) est repliable et/ou est rétractable de façon télescopique.

13. Dispositif selon l'une quelconque des revendications précédentes, dans lequel ladite au moins une cartouche (42, 43) présente des agrafes et/ou des pinces.

14. Dispositif selon l'une quelconque des revendications précédentes, dans lequel la structure de surface souple (10) est réalisée sous forme de filet, dans lequel le filet (10) soit n'est pas traité soit est traité avec un insecticide, un herbicide, un fongicide et/ou un agent répulsif.

15. Dispositif selon l'une quelconque des revendications précédentes, comprenant en outre des pièges à phéromones pour la surveillance des insectes nuisibles.

16. Dispositif selon l'une quelconque des revendications précédentes, comprenant en outre des appâts pour le réglage et le contrôle des prédateurs.

17. Procédé pour le déploiement de structures de surface souples (10) sur des zones à protéger, comprenant les étapes suivantes:
a) coupler un dispositif selon l'une quelconque des revendications 1 à 16 à une machine de traction, une débardeuse ou un tracteur (14),
b) déplier et étendre l'écarteur (32),
c) tirer la structure de surface souple (10) au-dessus du rouleau entraîné (38) et de l'écarteur (32),
d) déplacer le dispositif sur le côté de la zone à protéger et simultanément dérouler la structure de surface souple (10) et un matériau lourd allongé (12) pendant que le dispositif est déplacé au-dessus de la zone à protéger, et
e) découper la structure de surface souple (10) et le matériau lourd allongé (12) après que la zone à protéger soit couverte avec la structure de surface souple (10),
dans lequel la structure de surface souple déployée est munie d'un lestage.

18. Procédé selon la revendication 17, dans lequel le matériau lourd allongé (12) est un cordon lesté, **caractérisé en ce qu'**après l'étape e), les extrémités du cordon lesté (12) sont nouées l'une à l'autre.

19. Procédé selon la revendication 17 ou 18, dans lequel la structure de surface souple (10) est traitée avec un insecticide, un herbicide, un fongicide et/ou un agent répulsif, **caractérisé en ce que** l'efficacité de la structure de surface souple traitée (10) est assurée par le contrôle et/ou la surveillance des organismes nuisibles.

20. Procédé selon la revendication 19, dans lequel les structures de surface souples traitées (10) sont remplacées après l'expiration d'un temps prédéterminé et/ou en cas de baisse de l'efficacité.

21. Procédé selon la revendication 20, dans lequel les étapes de procédé pour le remplacement d'une structure de surface souple (10) comprennent le déplacement d'un dispositif selon l'une quelconque des revendications 1 à 17 au bord d'une pile de grumes (20) couverte avec un filet (10), la liaison de la structure de surface souple (10) à une cartouche vide (43) et l'enroulement de la structure de surface souple (10) avec le dispositif à l'arrêt ou simultanément à un mouvement du dispositif au-dessus de la pile de grumes (20).
